# EUROPEAN PATENT APPLICATION

(11) **EP 3 896 276 A1**
(43) Date of publication of application: **20.10.2021**
(21) Application number: 20169601.0
(22) Date of filing: 15.04.2020
(51) Int. Cl.: F03D 7/02, F03D 80/50

(54) **METHOD OF OPERATING A WIND TURBINE**

(71) Applicant: Siemens Gamesa Renewable Energy A/S, 7330 Brande (DK)
(72) Inventor: Egedal, Per, 7400 Herning (DK)
(74) Representative: Aspacher, Karl-Georg

(57) **Abstract**

The invention describes a method of operating a wind turbine (1), the wind turbine (1) comprising an active damping system (2) realised to counteract tower oscillations (X) by adjusting rotor blade pitch angle and/or generator torque during a normal mode of operation (N) of the wind turbine (1), which method comprises the steps of initiating a comfort mode of operation (C) during which service personnel will be present in the wind turbine (1) ; reducing the rotational speed of the aerodynamic rotor (10) to a speed (ω_{LO}) that is at least 50% of its rated speed (ω₁₀₀) ; and implementing the active damping system (2) to counteract tower oscillations (X) during the comfort mode of operation (C).

## Description

### Background

In order to carry out a service routine in a wind turbine, it is necessary to put the wind turbine in a "safe mode" of operation to minimize risk for service personnel in the wind turbine.

The type of wind turbine under discussion in the following may be assumed to be a large wind turbine that affords physical access to the tower interior, the nacelle interior, and other interior spaces such as a hub cavity. The type of wind turbine under discussion may also be assumed to implement a specific type of active damping during operation, namely adjusting the blade pitch angle and/or generator torque to minimize tower oscillations. Such a wind turbine can counteract tower oscillations, for example by adjusting the blade pitch angle as required. The advantage of such a wind turbine is its reduced need for expensive and large dampers, for example passive fluid dampers installed in the upper tower level.

During a maintenance routine, the risk to service personnel can be reduced in a number of ways. In one approach, the wind turbine is simply stopped. A rotor lock can be implemented to ensure that the aerodynamic rotor does not turn. In this standstill mode, the wind turbine does not generate any output power. In another approach, the wind turbine can be put into an idle mode, in which the aerodynamic rotor is allowed to turn only very slowly, e.g. at a speed of a few rpm. This mode is used, for example, when service routines are not scheduled for any rotating components or for the generator. In such an idle mode, the slow rotation of the aerodynamic rotor does not result in generator torque, so that the wind turbine does not generate any output power. One significant drawback of these modes is that the generator cannot not export electricity to the grid, so that the idle mode or standstill mode results in a loss of earnings. The idle mode and standstill mode may be regarded as equivalent modes in the following, and the term "standstill" shall be understood to apply to both.

A further problem is given by the oscillations that arise when the wind turbine is put into standstill. The loads on the tower - caused by the wind - are generally higher in standstill compared to normal operation. In the case of an offshore wind turbine, the loads on the foundation - caused by wave action - are also generally higher in standstill compared to normal operation. Standstill vibration is recognised as a serious problem. Not only does it present problems for the structural integrity of the wind turbine, it can also cause seasickness for a technician in the tower, nacelle, or other interior space, or for a technician on the foundation of an offshore wind turbine.

However, at low rotor speed, active damping by blade pitch angle or generator torque cannot be implemented, since they are only effective during normal operation of the wind turbine.

It is therefore an object of the invention to provide an improved way of operating a wind turbine of the type described above.

This object is achieved by the method of claim 1 of operating a wind turbine, and by the wind turbine of claim 10.

In the following, the wind turbine under discussion may be assumed to comprise an active damping system that is realised to counteract fore-aft and side-to-side tower oscillations by adjusting one or both of rotor blade pitch angle and generator torque during a normal mode of operation of the wind turbine. Such an active damping system can observe the frequency and amplitude of the tower oscillations and can generate control signals to relevant components of the wind turbine in order to adjust the blade pitch angle and/or to adjust the generator torque. From this it shall be understood that the system is able to adjust both parameters to achieve the desired damping, and is also able to adjust one of these parameters if such adjustment is sufficient to achieve the desired damping. For example, the blade pitch angle and/or the generator torque may be adjusted to achieve a decrease in tower oscillation amplitude. Equally, in the case that the tower oscillations are relatively benign, the active damping system can adjust the blade pitch angle and/or the generator torque in order to increase the power output by the wind turbine. It may also be assumed that the wind turbine does not comprise any physical damper to suppress tower oscillations, for example it does not comprise any permanent damper installed in the tower.

The invention describes a method of operating such a wind turbine to facilitate a maintenance procedure requiring the presence of service personnel in an interior space of the wind turbine, or on the foundation or transition piece of an offshore wind turbine. The method comprises the steps of initiating a comfort mode of operation, i.e. a mode of operation in which service personnel is present in the wind turbine; reducing the rotational speed of the rotor to a speed that is at least 50% of its rated speed; and implementing the active damping system to reduce tower oscillations during the comfort mode. The rotational speed of the rotor is preferably reduced to a speed that is within 50% - 95% of its rated speed, more preferably to a speed that is within 50% - 90% of its rated speed.

The step of initiating the comfort mode of operation can be done by a local switch that - when actuated from the wind turbine - disables remote control and enables local control of the wind turbine. When in its other "default" position, the local switch enables remote control of the wind turbine. Alternatively, the step of initiating the comfort mode of operation can be done from a handheld terminal operated by a technician in the wind turbine.

Since the tower oscillations are reduced during the maintenance mode, work being done on the wind turbine is not affected by unwanted motion of the tower. This can contribute in a significant way to the comfort of the maintenance personnel. By suppressing oscillations that would arise when the wind turbine is not operating at normal speed, the safety and comfort of the technician(s) is increased. The "comfort mode" of operation is therefore a maintenance mode of operation which takes into account the safety and well-being of the service personnel.

According to the invention, the wind turbine comprises a means of initiating a comfort mode of operation, i.e. a mode of operation in which service personnel is present in the wind turbine; and a controller that is configured to reduce the rotational speed of the aerodynamic rotor by at most 0% - 50% and to implement the active damping system to counteract tower oscillations during the comfort mode.

Particularly advantageous embodiments and features of the invention are given by the dependent claims, as revealed in the following description. Features of different claim categories may be combined as appropriate to give further embodiments not described herein.

The invention can be implemented in a direct-drive wind turbine or a geared wind turbine. It is assumed herein that the wind turbine complies with safety standard ISO 13849.From the point of view of vibration, the inventor has realised that a "sweet spot" can be observed when the rotational speed is in the range of 50% - 100% of rated speed. If the rotational speed is not decreased to a level below 50% of rated, it is possible to significantly increase the safety and comfort of a technician working in the wind turbine.

As explained above, the comfort mode of operation can be initiated locally by service personnel. For example, after entering the tower, a technician can actuate a hardware switch accessible at the base of the tower to enable local control of the wind turbine, and the function of such a switch could be modified to automatically also trigger the comfort mode of operation. Alternatively, the technician may carry a hand-held terminal that is able to identify the wind turbine and to communication with the wind turbine controller, and which permits the technician to initiate local control of the wind turbine. The hand-held terminal may also be programmed to automatically also trigger the comfort mode of operation when a local control mode is enabled. Alternatively, the comfort mode of operation can be initiated from a remote location, for example by a park controller.

The wind turbine of the type discussed herein makes use of an active damping system to reduce tower oscillations when the wind turbine is operating in a normal mode. This active damping system means that the wind turbine does not need to be equipped with large passive dampers, for example fluid dampers high up in the tower. However, this type of active damping system can of course only be deployed as long as the adjusting of blade pitch angle and generator torque has an effect.

At low rotational speeds, an adjustment of blade pitch angle or an adjustment of generator torque may not have any significant effect on the tower oscillations. The aerodynamic rotor provides significant aerodynamic damping as long the rotational speed exceeds 50% of its rated speed. The wind turbine's rated speed shall be understood to represent 100% herein. Therefore, in the comfort mode of the invention, the rotational speed is reduced to a speed that is not less than 50%. For example, in a preferred embodiment of the invention, the rotor speed is reduced to 80% - 90% of rated speed. At the reduced rotational speed, the generator torque can be increased without exceeding a maximum torque threshold of the generator. The generator torque can be increased but saturated at rated torque, so that the maximum output power in comfort mode will be reduced by the same fraction as the generator speed, i.e. by the same fraction as the aerodynamic rotor speed.

A wind turbine controller will usually receive wind direction data from a weather station, and will actuate the yaw drive in order to minimize yaw error angle. Ideally, the yaw error angle would be 0°, but in reality a yaw error angle of 1.5° - 2° is practicable. However, the working conditions of service personnel carrying out a maintenance procedure in the nacelle can be unfavourable if frequent adjustments are being made to keep the hub facing into the wind. Such frequent adjustments may generally be required when the wind direction changes often. Similarly, a wind turbine may see turbulent airflow when it is downstream of a further wind turbine. The yawing motion of the nacelle in addition to slight tower oscillations may lead to seasickness. Therefore, in a preferred embodiment of the invention, the method further comprises a step of reducing yaw activity. For example, in a preferred embodiment of the invention, the maximum yaw error angle is increased to at least 10°. This means that the wind turbine controller will not actuate the yaw system as long as the yaw error is less than 10° relative to the ideal (in which the yaw error is 0° and the aerodynamic rotor is facing directly into the wind). During comfort mode, the maximum yaw error angle can even be increased up to 20°.

During operation of the wind turbine, various components in the nacelle emit noise. The generator itself is noisy, but other components such as ventilators and air-conditioning units are loud, mostly on account of the various fans or blowers that may be used to cool the hot components. High noise levels can increase stress and make it difficult for personnel to concentrate on the task to be performed. Therefore, in a further preferred embodiment of the invention, the method comprises a step of reducing the noise level in the nacelle interior, for example by reducing the activity of a cooling apparatus. For example, the rotational speed of a fan or blower can be reduced as long as the comfort mode is active.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an offshore wind turbine 1;
Figure 2 is a block diagram showing the relevant components of an embodiment of the inventive wind turbine;
Figure 3 illustrates the effect of the inventive method.

In the diagrams, like numbers refer to like objects throughout. Objects in the diagrams are not necessarily drawn to scale.

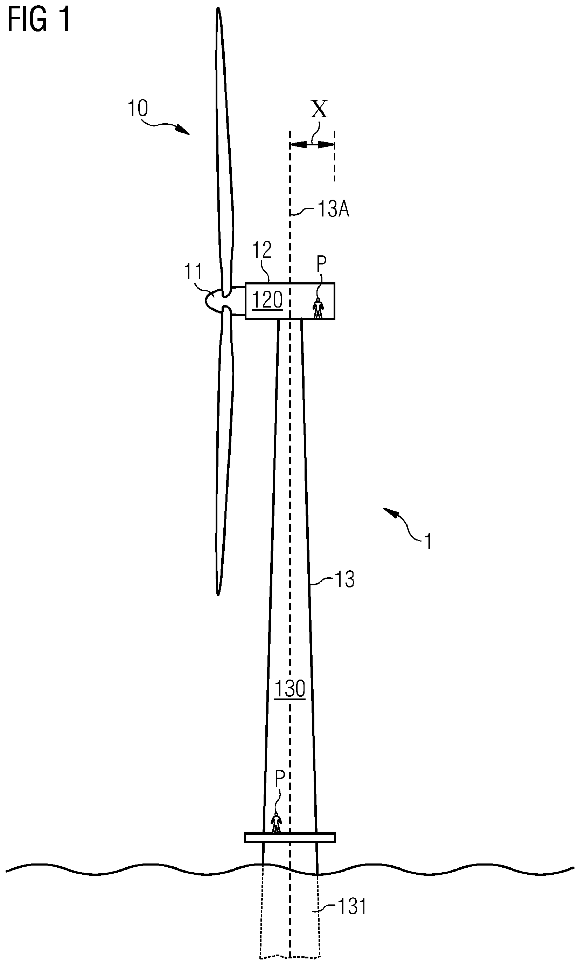

Figure 1 shows an offshore wind turbine 1, with an aerodynamic rotor 10 attached to a hub 11, which in turn is mounted at the front of a nacelle 12. The nacelle 12 is mounted on top of a tower 13. A yaw system (not shown) can turn the nacelle so that the aerodynamic rotor 10 always faces into the wind. The combined effects of various forces will result in side-to-side and/or fore-aft oscillations X of the tower 13. Without any damping system, the unchecked oscillations would lead to structural damage. With an active damping system of the type described above, the pitch angle of the rotor blades can be adjusted to counteract oscillations. Equally, the generator torque can be adjusted to counteract oscillations. However, these measures are only deployed in the prior art wind turbines during operation. In a standstill mode (to carry out repairs, for example), the oscillations may be so severe that personnel P experience seasickness and their ability to work is compromised. Such discomfort can be experienced in any interior space of the wind turbine 1, for example in the nacelle interior 120 or the tower interior 130. Equally, a technician P standing on a transition piece between tower 13 and foundation 131 may experience significant discomfort when the tower oscillates.

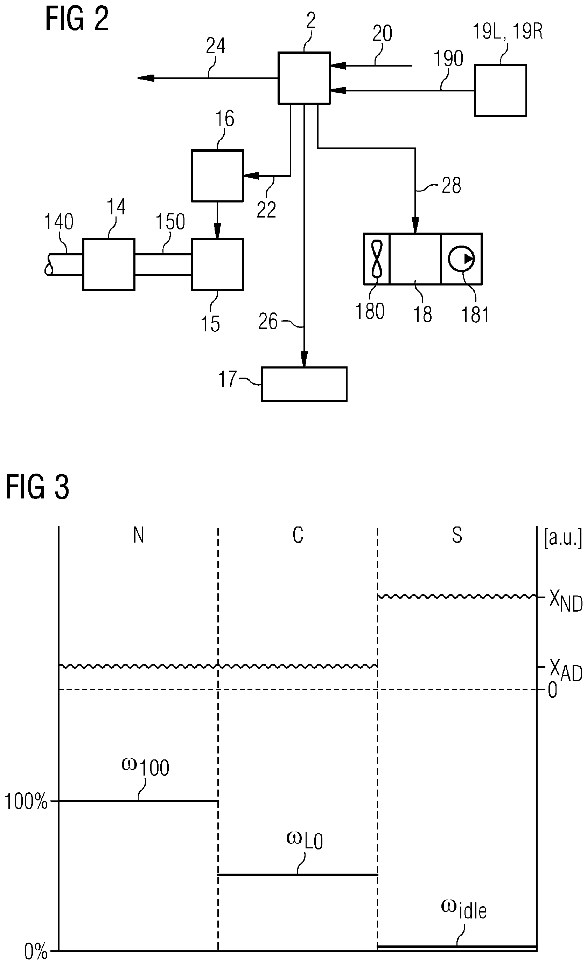

Figure 2 shows a block diagram showing the relevant components of an embodiment of the inventive wind turbine. The wind turbine comprises an active damping system 2 that is realised to counteract tower oscillations by adjusting rotor blade pitch angle (by issuing a pitch reference 24) and/or generator torque (by issuing a torque reference 22) during a normal mode of operation of the wind turbine, and also during a comfort mode of operation during which service personnel will be present in the wind turbine. The comfort mode is initiated by a local controller 19L or by a remote controller 19R. Once the comfort mode is initiated, the rotational speed of the aerodynamic rotor, i.e. the rotational speed of the low-speed shaft 140, is reduced to a speed ω_{LO} that is at least 50% of its rated speed ω₁₀₀. The active damping system 2 continues to counteract tower oscillations during the comfort mode. This can entail corrective pitch references 24 to the rotor blade pitch systems, and/or corrective torque references 22 to a converter 16. These references 22, 24 result in altered blade pitch angles and/or altered generator torque with the effect of damping the tower oscillations while allowing the wind turbine to export power.

The comfort of any service personnel can be increased by reducing the noise level in the nacelle interior 120. To this end, the active damping system 2 issues a control signal 28 to a cooling arrangement 18 so that the speed of a blower 180 is reduced. The comfort of service personnel can also be increased by reducing the yawing motions of the nacelle. To this end, the active damping system 2 sets a larger yaw error reference 26 to a yaw system 17, so that a corrective yaw action is performed only infrequently.

Figure 3 illustrates the effect of the inventive method when carried out by the wind turbine explained in Figure 2 above. In a normal mode of operation N, the aerodynamic rotor turns at its rated speed ω₁₀₀, i.e. at 100% of its rated speed, and the active damping system 2 ensures that the oscillation amplitude is kept to a minimum X_{AD}. In a comfort mode of operation C, the aerodynamic rotor turns at a reduced rated speed ω_{LO}, which can be any level that is not less than 50% of rated speed ω₁₀₀, and the active damping system 2 continues to ensure that the oscillation amplitude is kept to a minimum X_{AD}.

In contrast, if the aerodynamic rotor is halted or only turns at a very low speed ω_{idle} such as 1 rpm, an active damping system cannot be deployed to reduce tower oscillations. Without any active damping, the tower oscillations can reach unfavourable high levels X_{ND}.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A method of operating a wind turbine (1), the wind turbine (1) comprising an active damping system (2) realised to counteract tower oscillations (X) by adjusting rotor blade pitch angle and/or generator torque during a normal mode of operation (N) of the wind turbine (1), which method comprises the steps of
- initiating a comfort mode of operation (C) during which service personnel will be present in the wind turbine (1) ;
- reducing the rotational speed of the aerodynamic rotor (10) to a speed (ω_{LO}) that is at least 50% of its rated speed (ω₁₀₀); and
- implementing the active damping system (2) to counteract tower oscillations (X) during the comfort mode of operation (C).

2. A method according to claim 1, wherein the rotational speed is reduced to a speed (ω_{LO}) that is at least 75% of its rated speed (ω₁₀₀) during the comfort mode of operation (C).

3. A method according to claim 1 or claim 2, wherein generator torque is increased during the comfort mode of operation (C).

4. A method according to any of the preceding claims, comprising a step of reducing yaw activity during the comfort mode of operation (C).

5. A method according to the previous claim, wherein the maximum yaw error angle is increased to at least 10°, more preferably up to 20°.

6. A method according to any of the preceding claims, comprising a step of reducing the noise level in the nacelle interior (120) during the comfort mode of operation (C).

7. A method according to the previous claim, wherein the noise level is reduced by reducing the activity of a cooling apparatus (18) and/or by lowering the speed of a fluid pump (181) .

8. A method according to any of the preceding claims, wherein the active damping system (2) is controlled to increase the amount of active damping during the comfort mode of operation (C) .

9. A method according to any of the preceding claims, wherein the comfort mode of operation (C) is initiated locally by service personnel (P).

10. A method according to any of the preceding claims, wherein the comfort mode of operation (C) is initiated from a remote controller (19R).

11. A wind turbine (1) comprising an active damping system (2) realised to counteract tower oscillations (X) by adjusting rotor blade pitch angle and/or generator torque during a normal mode of operation of the wind turbine (1), the wind turbine (1) further comprising a controller (19L, 19R) configured to carry out the steps of the method according to any of claims 1 to 10.
